# EUROPEAN PATENT SPECIFICATION

(11) **EP 3 647 474 B1**
(45) Date of publication and mention of the grant of the patent: **01.04.2026**
(21) Application number: 18889295.4
(22) Date of filing: 27.07.2018
(51) Int. Cl.: D01F 6/84, D01F 11/08, C08G 63/183, C08G 63/78, D01D 5/096

(54) **LOW SHRINKAGE POLYESTER INDUSTRIAL YARN AND PREPARATION METHOD THEREOF**
POLYESTERINDUSTRIEGARN MIT NIEDRIGER SCHRUMPFUNG UND HERSTELLUNGSVERFAHREN DAFÜR
FIL INDUSTRIEL DE POLYESTER À FAIBLE RETRAIT ET PROCÉDÉ DE PRÉPARATION ASSOCIÉ

(30) Priority: 14.12.2017 CN 201711340351
(43) Date of publication of application: 06.05.2020
(73) Proprietor: Jiangsu Hengli Chemical Fibre Co., Ltd., Wujiang, Jiangsu 215226 (CN)
(72) Inventor: FAN, Hongwei, Shengze Town Wujiang, Jiangsu 215226 (CN); SHAO, Yiwei, Shengze Town Wujiang, Jiangsu 215226 (CN); YIN, Lixin, Shengze Town Wujiang, Jiangsu 215226 (CN); TANG, Fangming, Shengze Town Wujiang, Jiangsu 215226 (CN)
(74) Representative: Franks & Co Limited
(86) International application number: PCT/CN2018/097502
(87) International publication number: WO 2019/114278

(56) References cited:
- CN-A- 101 063 236
- CN-A- 102 030 893
- CN-A- 106 400 162
- CN-A- 106 400 165
- CN-A- 106 400 165
- CN-A- 108 130 609
- US-A- 5 045 260
- S K PUNJ ET AL: "Effect of extension rate and gauge length on tensile behaviour of ring and air-jet spun yams", INDIAN JOURNAL OF FIBRE & TEXTILE RESEARCH, 31 March 1998 (1998-03-31), pages 19 - 24, XP055711081, Retrieved from the Internet <URL:http://nopr.niscair.res.in/bitstream/123456789/31826/1/IJFTR%2023(1)%2019-24.pdf> [retrieved on 20200702]

## Description

### TECHNICAL FIELD

The present invention belongs to the technical field of fiber production, and more particularly, relates to a low-shrinkage polyester industrial yarn and its preparation method.

### BACKGROUND

Since the invention of polyethylene terephthalate (PET) fiber, it has been rapidly developed due to its excellent properties, and its production volume ranks first among the world's synthetic fibers. Polyester fibers have a series of excellent properties such as high breaking strength, high elastic modulus, moderate resilience, excellent heat setting properties, good heat and light resistance, strong resistance to acid, alkali and corrosion and so on, and fabrics prepared therefrom also have advantages such as wrinkle resistance and good stiffness. It has been widely used in the fields of fibers, bottle packaging, films, sheets, etc., with production increasing year by year, and its industry status significantly improved.

However, during the polycondensation reaction for synthesizing ethylene terephthalate, especially in the formation of linear high polymers, linear and cyclic oligomers are also produced due to high-temperature oxidative degradation. Cyclic oligomers are formed during the polycondensation stage through back-biting reaction and cyclization reaction at the ends of macromolecular chains, and approximately 70% or more of these cyclic oligomers are cyclic trimers, which has properties such as high tendency to aggregate and crystallize, and high chemical and thermal stability. The formation of cyclic trimers has following effects on the polyester processing: (1) it will block the spinning assembly, reducing the service life of melt filters and components; (2) it will precipitate during the fiber heat setting process, depositing on heating rolls, causing increased friction and uneven heating; (3) during the dyeing process, dyes aggregate and adhere to the fiber surface around cyclic trimers, resulting in dye spots, stains, and color mottling on the fiber surface, which affects the handfeel and color appearance of woven fabrics. Simultaneously, circular oligomers filled with pipes and valves limit the normal flow velocity of the melt, resulting in uneven dyeing of the fibers and poor reproducibility; (4) it will adhere to fiber surfaces, causing difficulty in winding, and the phenomenon of yarn breakage and uneven thickness, which affects mechanical properties such as breaking strength and elongation at break of the fiber, severely impacting product quality.

Since most PET fibers have a small dielectric constant, a low rate of moisture regain and a high coefficient of friction, spinning oils must be used in the spinning process. The main component of the oil is a surfactant, which can form a directional adsorption layer on the surface of the chemical fiber, that is, an oil film. On one hand, the hydrophilic group of the oil film faces outward, adsorbing moisture from the air to form a continuous water film on the fiber surface, causing charged ions to migrate across it, and reducing the accumulation of static charges generated by friction between fibers, which reduces the surface resistance of the fibers and increases the electrical conductivity of the fibers. On the other hand, while the oil film isolates the fibers, it also exerts a certain affinity for the fiber, ensuring that it maintains a certain degree of bundling without being scattered. In addition, the oil film also imparts a certain smoothness to the fiber, preventing it from damage during the friction process and providing a good hand feel, so that the fiber can smoothly pass through winding, stretching, drying and other operation steps during the spinning process, eliminating static effects in textile processing, avoiding undesirable phenomena such as fibers wrapping around aprons, rollers, or cylinders, reducing the occurrence of lousiness and broken ends, and ensuring the quality of fiber products.

Under high temperatures, high speeds, and certain pressures, the oil film on the fiber surface will be broken and will change the friction behaviour of the fiber, increasing friction force and leading to issues such as lousiness and broken ends. The higher the strength of the oil film, the more resistant it is to break, thereby enhancing the fiber's spinnability. When the oil is uniformly adsorbed on the fiber surface, a relatively uniformly distributed oil film forms, which rapidly and uniformly extends when the fiber is stretched. If the viscosity of the oil is too high, it hinders dispersion of the oil and prevents the formation of a uniform oil film. With the advancement of high-speed and ultra-high-speed polyester filament production and the development of multifunctional fibers, it is of practical significance to develop an oil with good heat resistance, low viscosity, high oil film strength, good smoothing properties and strong antistatic property.

At present, there are two main problems in the preparation of low-shrinkage polyester industrial yarns. First, the oil volatilizes quickly and is easy to adhere to the fiber surface, resulting in high unevenness and inferior performance of the produced fibers. Second, the volatilization of the oligomer in the fiber remains on the surface of the spinneret, causing lousiness and affecting the quality of the fiber.

Therefore, how to provide a method for preparing a low-shrinkage polyester industrial yarn having a uniform spinning and a low oligomer content has become an urgent problem to be solved.

Low shrinkage polyester yarns are disclosed in the following prior art:CN-A-106400165, US-A-5045260, CN-A-106400162.

CN-A-101063236 further discloses a high shrinkage modified polyester with 3-methyl-3-ethyl-1,5-pentanediol.

### SUMMARY

The object of the present invention is to overcome the problems in the prior art that the fiber unevenness caused by oil volatilizing quickly and easily adhere to the surface of the fiber, and the fiber quality affected by excessive residual oligomer in the spinneret, and provides a low-shrinkage polyester industrial yarn with uniform spinning and low oligomer content and its preparation method. The introduction of the branched diol in the modified polyester of the invention reduces the cyclic oligomer produced in the polyester side reaction and improves the quality of the fiber; the use of oil containing crown ether improves the oil's heat resistance and lubricity, and improves the quality of the fiber, since the crown ether has lower viscosity and higher volatilization point than conventional smoothing agents, the oil containing crown ether has smaller friction coefficient and better heat resistance stability, so that improving the processing properties of the fiber and reducing the appearance of lousiness.

To this end, the technical schemes of the present application are as follows:
A low-shrinkage polyester industrial yarn, wherein a material of the low-shrinkage polyester industrial yarn is a modified polyester, and a molecular chain of the modified polyester comprises a terephthalic acid segment, an ethylene glycol segment and a branched diol segment;
wherein a structural formula of the branched diol segment is as follows: 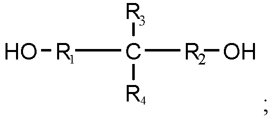
wherein R₁ and R₂ are each independently selected from a linear alkylene group having 1-3 carbon atoms, R₃ is selected from an alkyl group having 1-5 carbon atoms, and R₄ is selected from an alkyl group having 2-5 carbon atoms; the purpose of limiting the number of carbon atoms: the introduction of the branched structure and the long-chain structure in the diol causes weakens the electronegativity of the alkoxy moiety, and the number of carbon atoms in the branched structure is too small, so that the electronegativity of the alkoxy moiety is small, which has little meaning for reducing the formation of the cyclic oligomer; if the number of carbon atoms in the branched structure is too large, entanglement between molecules will occur, which affects the distribution of molecular weight;
wherein a dry heat shrinkage rate of the low-shrinkage polyester industrial yarn is 2.5-4.7% under a condition of 190 °C for 15 min and 0.01 cN/dtex.

The following preferred technology program is presented to give a detailed description for this invention:
The said low-shrinkage polyester industrial yarn, wherein the low-shrinkage polyester industrial yarn has a fineness of 550-4400 dtex, a linear density deviation rate of ±1.5%, a breaking strength ≥7.0 cN/dtex, a breaking strength CV value ≤3.0%, an elongation at break center value of 19.0-21.0%, an elongation at break deviation rate of ±2.0%, an elongation at break CV value ≤8.0%, an interlacing degree of 4-9/m, and an oil content of 0.60±0.20%; wherein the low CV value for elongation at break indicates good product uniformity and high fiber quality.

The said low-shrinkage polyester industrial yarn, wherein the content of a cyclic oligomer in the modified polyester is ≤0.6 wt%; the present invention significantly reduces the production amount of the cyclic oligomer compared to the prior art.

The said low-shrinkage polyester industrial yarn, wherein the modified polyester has an average molecular weight of 20,000-27,000 and a molecular weight distribution index of 1.8-2.2; the modified polyester has high molecular weight and narrow molecular weight distribution, meeting the requirements for spinning processes and facilitating the production of fibers with excellent properties.

The said low-shrinkage polyester industrial yarn, wherein the molar content of the branched diol segment in the modified polyester is 3-5% of a molar content of a terephthalic acid segment; the low molar content of branched diol segments in modified polyesters is beneficial to preserve the excellent properties of the polyester.

The said low-shrinkage polyester industrial yarn, wherein the branched diol segment is 2-ethyl-2-methyl-1,3-propanediol, 2,2-diethyl-1,3-propanediol, 2-butyl-2-ethyl-1,3-propanediol, 3,3-diethyl-1,5-pentanediol, 4,4-diethyl-1,7-heptanediol, 4,4-di(1,-methylidene)-1,7-heptanediol, 3,3-dipropyl-1,5-pentanediol, 4,4-dipropyl-1,7-heptanediol, 4-methyl-4-(1,1-dimethylethyl)-1,7-heptanediol, 3-methyl-3-pentyl-1,6-hexanediol or 3,3-dipentyl-1,5-pentylene glycol.

The said low-shrinkage polyester industrial yarn, wherein the modified polyester is prepared by: uniformly mixing the terephthalic acid, ethylene glycol, and the branched diol, then performing an esterification reaction and a polycondensation reaction to obtain the modified polyester; wherein the preparation steps comprise:
(1) the esterification reaction comprises;
   uniformly stirring the terephthalic acid, the ethylene glycol and the branched diol into a slurry; adding a catalyst and a stabilizer into the slurry; then carrying out the esterification reaction under a nitrogen atmosphere with a pressure of normal pressure to 0.3 MPa, the temperature of the esterification reaction is 250-260 °C, and the esterification reaction ends when the water distillation amount in the esterification reaction reaches more than 90% of a theoretical value;
(2) the polycondensation reaction comprises;
   after the esterification reaction, carrying out a low vacuum stage of the polycondensation reaction under a condition of negative pressure; pumping the pressure smoothly from normal pressure to an absolute pressure under 500 Pa in 30-50 min; a first reaction temperature is 260-270 °C, and a first reaction time is 30-50 min, then continuously pumping the vacuum, and carrying out a high vacuum stage of the polycondensation reaction, wherein during the high vacuum stage the reaction pressure is further reduced to an absolute pressure under 100Pa, a second reaction temperature is 275-285 °C, and a second reaction time is 50-90min, so that the modified polyester is prepared.

The said low-shrinkage polyester industrial yarn, wherein in the step (1), a molar ratio of terephthalic acid, ethylene glycol and the branched diol is 1:(1.2-2.0):(0.03-0.06), the catalyst is added in an amount of 0.01-0.05% by weight of terephthalic acid, and the stabilizer is added in an amount of 0.01-0.05% by weight of terephthalic acid;
wherein the catalyst is antimony trioxide, ethylene glycol or barium acetate, and the stabilizer is triphenyl phosphate, trimethyl phosphate or trimethyl phosphite.

The present invention also provides a method for preparing the said low-shrinkage polyester industrial yarn, wherein the modified polyester is processed through solid state polycondensation, melting, metering, extruding, cooling, oiling, stretching, heat setting, and winding to prepare the low-shrinkage polyester industrial yarn;
wherein an oil in the oiling contains crown ether, and the content of crown ether is 67.30-85.58wt%; the content of crown ether in the oil of this invention needs to be maintained within a certain range, if the amount of crown ether added is too low, it will be impossible to produce an oil with low viscosity, good heat resistance, and high oil film strength, if the amount of crown ether added is too high, it will adversely affect other properties indexes of the oil.

The crown ether is a heterocyclic organic compound containing a plurality of ether groups. The wetting ability of the crown ether surfactant is larger than that of the corresponding open-chain compound, and the crown ether has better solubilization. The solubility of the salt compound in the organic compound is low, but with the addition of the crown ether, the solubility of the organic compound of the salt compound is improved. Ordinary polyester compounds or polyethers in the oil, due to larger molecular weight and hydrogen bonding, the interaction between molecules is larger, which is manifested in a larger kinematic viscosity. After the addition of crown ether, the crown ether can be better compatible with the polyester compound or the polyether oil system, enter the polyester compound or the polyether molecular chain, and shield the interaction between the molecular chains, thereby causing a reduction in the viscosity of the oil system. At the same time, antistatic agents for chemical fiber oils are mainly classified into anionic, cationic and amphoteric surfactants, most of which contain metal ions or exist in the form of salts, making the antistatic agent have poor compatibility with polyester compounds or polyether compounds in the oil. The addition of the crown ether improves the compatibility of the antistatic agent with polyester compounds or polyether compounds due to the salt dissolution effect, thereby improving the strength of the oil film, which has great significance for spinning stability and product holding. The index of the oil is a reflection of comprehensive factors, so it imposes certain restrictions on the amount of crown ether added. If it is too low, the advantages of the oil's heat resistance and oil film strength will not be fully reflected, and if it is too much, other indicators will be limited.

Wherein the oil is dispersed in water to obtain an emulsion with a concentration of 14-18 wt%; the concentration of the emulsion can be adjusted according to the actual application.

The following preferred technology program is presented to give a detailed description for this invention:
The said method, wherein the intrinsic viscosity of the modified polyester after the solid phase polycondensation is 1.0-1.2 dL/g; the intrinsic viscosity serves as a characteristic mode of molecular weight, if the intrinsic viscosity is too high, the subsequent processing temperature will be increased, making the product prone to thermal degradation; if the intrinsic viscosity is too low, it is difficult to achieve the required strength and properties.

The said method, wherein the replacement cycle of the spinning assembly is ≥40 days; the longer the replacement period of the assembly, the better the stability of the product, and it also reduces production costs and enhances economic efficiency.

The said method, wherein the heat loss of the oil is less than 15 wt% after the oil is heat-treated at 200 °C for 2 hours; the crown ether has a higher volatile point and excellent heat stability, and the heat resistance of the oil is significantly enhanced after the introduction of the crown ether;
wherein the oil has a kinematic viscosity of 27.5-30.1 mm²/s at (50±0.01) °C, and the kinematic viscosity of the emulsion prepared by dispersing the oil in water with the concentration of 10 wt% is 0.93-0.95 mm²/s; the crown ether can reduce the viscosity of the oil primarily due to the lower viscosity of the crown ether itself and bead-like molecular structure; after introducing the crown ether into the oil, the crown ether exhibits good compatibility in the oil containing polyester compounds or polyether compounds, and also enters the molecular chains of polyester compounds or polyether compounds, shielding the force between the molecular chains, thereby reducing the viscosity of the oil;
wherein an oil film strength of the oil is 121-127 N; in the prior art, the oil film strength of the oil is relatively low, generally about 110N, which is mainly because the antistatic agent of the chemical fiber oil mostly contains metal ions or exists in the form of salt, resulting in poor compatibility between the antistatic agent and polyester compounds or polyether compounds in the oil; the crown ether can improve the oil film strength mainly due to the salt dissolution effect after the addition of the crown ether, which improves the compatibility between the antistatic agent and polyester compounds or polyether compounds, thereby increasing the strength of the oil film;
wherein a surface tension of the oil is 23.2-26.8 cN/cm, and a specific resistance is (1.0×10⁸)-(1.8×10⁸) Ω·cm;
after oiling, the static friction coefficient between fibers and fibers is 0.250-0.263, and the dynamic friction coefficient is 0.262-0.273;
after oiling, the static friction coefficient between fibers and metals is 0.202-0.210, and the dynamic friction coefficient is 0.320-0.332;
wherein the crown ether is 2-hydroxymethyl-12-crown-4, 15-crown-5 or 2-hydroxymethyl-15-crown-5;
wherein the oil further comprises a mineral oil, a potassium phosphate salt, a trimethylolpropane laurate and a sodium alkyl sulfonate;
wherein the mineral oil is one of mineral oils of 9#-17#;
wherein the potassium phosphate salt is a potassium salt of lauryl phosphate, an isomeric tridecyl polyoxyethylene ether phosphate potassium salt or a tetradecyl alcohol phosphate potassium salt; and
wherein the sodium alkyl sulfonate is a sodium dodecyl sulfate, a sodium pentadecyl sulfonate or a sodium hexadecyl sulfonate.

The said method, wherein the oil is prepared by: uniformly mixing said crown ether with potassium phosphate salt, trimethylolpropane laurate and sodium alkyl sulfonate to obtain a mixture, adding the mixture to the mineral oil and stirring to obtain the oil; wherein the addition quantities of each component by weight parts are as follows:
mineral oil 0-10 parts;
trimethylolpropane laurate 0-20 parts;
crown ether 70-100 parts;
phosphate potassium salt 8-15 parts;
sodium alkyl sulfonate 2-7 parts;
wherein the mixing is carried out at a normal temperature, and the stirring temperature is 40-55 °C, and the stirring time is 1-3 hours.

The said method, wherein the spinning process parameters of the low-shrinkage polyester industrial yarn are as follows:
a temperature of each zone of a screw is 290-320 °C;
a temperature of a beam is 295-300°C;
a spin head pressure is 170±5 Bar;
a side blowing temperature is 23±2 °C;
a side blowing humidity is 80±5 %;
a side blowing air velocity is 0.55±0.10 m/s;
a pre-entangling pressure is 0.16±0.02 MPa;
an entangling pressure is 0.20±0.02 MPa;
a winding speed is 2600-3400 m/min;
wherein the process parameters for stretching and heat setting are as follows:
   GR-1 speed is 500-600 m/min;
   GR-2 speed is 520-1000 m/min; GR-2 temperature is 80-100 °C;
   GR-3 speed is 1800-2500 m/min; GR-3 temperature is 100-150 °C;
   GR-4 speed is 2800-3500 m/min; GR-4 temperature is 200-250 °C;
   GR-5 speed is 2800-3500 m/min; GR-5 temperature is 200-250 °C;
   GR-6 speed is 2600-3400 m/min; GR-6 temperature is 150-220 °C.

The principle of the invention is as follows:
The present invention firstly uses a modified polyester including a terephthalic acid segment, an ethylene glycol segment and a branched diol segment, then the modified polyester is processed through solid state polycondensation, melting, metering, extruding, cooling, oiling, stretching, heat setting, and winding to prepare the low-shrinkage polyester industrial yarn, wherein the oil in the oiling contains crown ether, and the content of crown ether is 67.30-85.58wt%; wherein the effect of the modified polyester and the oil on the properties of the prepared low-shrinkage activation-type polyester industrial yarn is as follows: the addition of modified polyester reduces the formation of cyclic oligomers, on one hand, improving the service life of assemblies, on the other hand, improving the uniformity of the fiber; the application of the oil containing a crown ether increases the stability of the spinning, thereby further improving the quality of the fiber.

In an organic compound, the angle between two chemical bonds formed by the same atom in a molecule is called a bond angle, and the bond angle is usually expressed by a degree. The electronegativity of a central atom and a coordinating atom in an organic compound molecule affects the bond angle of the molecule. When the electronegativity of the coordinating atom bonded to the central atom increases, the electron-withdrawing ability of the coordination atom improves, and the bonding electron pair will move toward the ligand, which is far from the central atom, causing the bond pairs to close to each other due to the decreased repulsive force, so that the bond angle is also reduced. Conversely, when the electronegativity of the coordinating atom bonded to the central atom is reduced, the electron-donating ability of the coordinating atom is enhanced, and the bonding electron pair will move toward the central atom, which is closer to the center atom, causing the bond pairs to move away from each other due to the increased repulsive force, so that the bond angle also increases.

According to Pauling's electronegativity scale, the electronegativity of C, H and O atoms are 2.55, 2.20 and 3.44, respectively. According to the valence electron energy balance theory, the calculation formula of the group electronegativity is as follows: 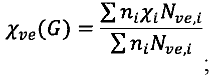 wherein *χᵢ* is the electronegativity of the neutral atom of the i atom before bonding, *N_{ve,i}* is the number of valence electrons in the i atom, and *nᵢ* is the number of i atoms in the molecule. The calculation steps for the more complex group electronegativity are mainly as follows: first calculating the electronegativity of the simple group, then treating the simple group as a quasi-atom and then calculating the electronegativity of the more complex group, so that iteratively, finally the electronegativity of the target group is obtained. It should be noted that, in calculating the electronegativity of a quasi-atom, a valence electron that is not bonded in a base atom (for example, a base atom of a group -OH is an O atom) is regarded as a valence electron of a quasi-atom.

In the present invention, after the C-O bond of the carboxyl group in terephthalic acid breaks, the C atom bonds with the O atom of the hydroxyl group in the diol to form a new C-O bond in the ester group; the bond angle between the C-C bond formed by the C atom in the ester group and the C atom on the benzene ring, and the newly formed C-O chemical bond, is denoted as α, and the change of the bond angle α affects the ring-forming reaction; when α is less than 109°, the molecule is liable to form a ring, and as α increases, the molecule becomes the chance of the ring will drop. The present invention introduces a branched diol with a structural formula as: 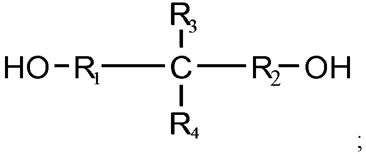 wherein R₁ and R₂ are each independently selected from a linear alkylene group having 1-3 carbon atoms, R₃ is selected from an alkyl group having 1-5 carbon atoms, and R₄ is selected from an alkyl group having 2-5 carbon atoms. Due to the introduction of the branched structure and the long-chain structure, the diol structure will weaken the electronegativity of the alkoxy moiety, and the calculation formula of the electronegativity of the group can also be used to obtain the diol structure and the diacid. The electronegativity of the carbonyl-linked group is between 2.59 and 2.79, and the electronegativity of the group -OCH₂CH₂- in the ethylene glycol to the carbonyl group in the diacid is 3.04, so that the alkoxy group has a stronger electron donating property than -OCH₂CH₂- in the ethylene glycol, therefore, the newly formed bonding electron pair on the C-O chemical bond will move toward the center C atom, which is closer to the central atom, causing the bond pairs to move away from each other due to the increased repulsive force, so that the bond angle α is greater than 109°, the probability of generating a linear polymer increasing, thereby reducing the generation of the cyclic oligomer, facilitating the elimination of the phenomenon of broken filaments and unevenness, which is advantageous for increasing the breaking strength of the fiber and reducing unevenness, improving the product quality.

The present invention obtains an oil with low viscosity, good heat resistance and high oil film strength by introducing crown ether into the oil. The higher viscosity of the oil in the prior art is mainly due to the fact that the oil contains ordinary polyester compounds or polyether compounds. Due to their large molecular weight and hydrogen bonding interactions, these compounds exhibit significant intermolecular effects as high kinematic viscosity, resulting in high viscosity of the oil; the crown ether can significantly reduce the viscosity of the oil primarily due to the lower viscosity of the crown ether itself and bead-like molecular structure, the crown ether exhibits good compatibility in the oil containing polyester compounds or polyether compounds, and also enters the molecular chains of polyester compounds or polyether compounds, shielding the force between the molecular chains, thereby reducing the viscosity of the oil; the oil film strength of the oil in the prior art is relatively low, which is mainly because the antistatic agent of the chemical fiber oil mostly contains metal ions or exists in the form of salt, resulting in poor compatibility between the antistatic agent and polyester compounds or polyether compounds in the oil; the crown ether can improve the oil film strength mainly due to the salt dissolution effect after the addition of the crown ether, which improves the compatibility between the antistatic agent and polyester compounds or polyether compounds, thereby increasing the strength of the oil film. In addition, the crown ether has a high volatile point and excellent heat stability, and the heat resistance of the oil is significantly enhanced after the introduction of the crown ether; due to the crown ether has low viscosity and high volatilization point, the oil containing crown ether has small friction coefficient and excellent heat resistance stability, thereby improving the processing properties of the fiber.

The addition of modified polyester in the present invention reduces the formation of cyclic oligomers, on one hand, improving the service life of assemblies, on the other hand, improving the stability of the spinning and the uniformity of the fiber; the application of the oil containing crown ether further increases the stability of the spinning, thereby improving the quality of the fiber.

Benefits:
(1) A low-shrinkage polyester industrial yarn of the present invention has a simple and rational preparation process, and the obtained polyester industrial yarn has the advantage of low dry heat shrinkage rate;
(2) A method for preparing a low-shrinkage polyester industrial yarn of the present invention, by introducing a branched diol into the modified polyester, it changes the bond angle of the polyester molecule, thereby significantly reducing the production of cyclic oligomers during polyester synthesis;
(3) A method for preparing a low-shrinkage polyester industrial yarn of the present invention, wherein the oil containing crown ether used in the oiling process has low viscosity, good heat resistance, high oil film strength, good smoothness and strong electrostatic properties, improving the stability of the spinning and the processing properties of the fiber.

### DETAILED DESCRIPTION OF THE EMBODIMENTS

Based on above mentioned method, the following examples are carried out for further demonstration in the present invention. It is to be understood that these examples are only intended to illustrate the invention and are not intended to limit the scope of the invention. In addition, it should be understood that after reading the contents described in the present invention, those technical personnel in this field can make various changes or modifications to the invention, and these equivalent forms also fall within the scope of the claims attached to the application.

A preparation method of a low-shrinkage polyester industrial yarn includes:
(1) the preparation of the modified polyester:
   (a) the esterification reaction; preparing a slurry from terephthalic acid, ethylene glycol and branched diol with the molar ratio of A', adding a catalyst, a matting agent and a stabilizer and mixing uniformly, then carrying out the esterification reaction under a nitrogen atmosphere with a pressure of B', the temperature of the esterification reaction is C, and the esterification reaction ends when the water distillation amount in the esterification reaction reaches D' of a theoretical value; wherein the catalyst is added in an amount of E by weight of terephthalic acid, the matting agent is added in an amount of F by weight of terephthalic acid, and the stabilizer is added in an amount of G by weight of terephthalic acid;
   (b) the polycondensation reaction; after the esterification reaction, carrying out the low vacuum stage of the polycondensation reaction under a condition of negative pressure, pumping the pressure smoothly from normal pressure to the absolute pressure I in H, the reaction temperature is J, the reaction time is K, and then continuously pumping the vacuum and carrying out a high vacuum stage of the polycondensation reaction, further decreasing the reaction pressure to the absolute pressure L', the reaction temperature is M, the reaction time is N, so that the modified polyester is prepared; wherein the molecular chain of the modified polyester includes terephthalic acid segment, ethylene glycol segment and branched diol segment, the content of the cyclic oligomer in the modified polyester is O, the number average molecular weight is P, the molecular weight distribution index is Q, and the molar content of the branched diol segment in the modified polyester is R of molar content of the terephthalic acid segment;
(2) the preparation of the oil; uniformly mixing the crown ether with potassium phosphate salt, trimethylolpropane laurate and sodium alkyl sulfonate at normal temperature to obtain a mixture, adding the mixture to the mineral oil and uniformly stirred at t1 for t2 to obtain the oil; the addition quantities of each component by weight parts are as follows: mineral oil is a1; trimethylolpropane laurate is a2; the crown ether is a3; phosphate potassium salt is a4; sodium alkyl sulfonate is a5. The prepared oil has a crown ether content of b, and the oil has excellent heat resistance, wherein the heat loss of the oil is less than b2 wt% after the oil is heat-treated at 200 °C for 2 hours; wherein the viscosity of the oil is low, the kinematic viscosity is b3 at (50±0.01) °C, and the kinematic viscosity of the emulsion prepared by dispersing the oil in water with the concentration of 10 wt% is b4; wherein the oil film strength is high, the oil film strength is c1, the surface tension of the oil is c2, and the specific resistance is c3; after oiling, the static friction coefficient between the fiber and the fiber is µₛ, while the dynamic friction coefficient is µ_{d}, and the static friction coefficient between the fiber and the metal is µₛ₁, while the dynamic friction coefficient is µ_{d1}. When using the prepared oil, the emulsion is prepared by dispersing the oil in water with the concentration of d.
(3) the modified polyester is processed through solid state polycondensation, melting, metering, extruding, cooling, oiling, stretching, heat setting, and winding to prepare the low-shrinkage polyester industrial yarn; wherein the intrinsic of the modified polyester after solid state polycondensation is E0, the replacement cycle of the spinning assembly is e; wherein the spinning process parameters of the low-shrinkage polyester industrial yarn are as follows: the temperature of each zone of the screw is T1; the temperature of the box is T2; the spin head pressure is P1; the side blowing temperature is T2'; the side blowing humidity is W1; the side blowing air velocity is V2; the pre-entangling pressure is P0, the entangling pressure is P2, and the winding speed is V3; wherein the process parameters for stretching and heat setting are as follows: GR-1 speed is V4; GR-2 speed is V5; GR-2 temperature is T3; GR-3 speed is V6; GR-3 temperature is T4; GR-4 speed is V7; GR-4 temperature is T5; GR-5 speed is V8; GR-5 temperature is T6; GR-6 speed is V9; GR-6 temperature is T7.

The prepared low-shrinkage polyester industrial yarn has a fineness of D1, a linear density deviation rate of D2, a breaking strength of Y1, a breaking strength CV value of Y2, an elongation at break center value of Y3, an elongation at break deviation rate of Y4, an elongation at break CV value of Y5, an interlacing degree of Z1/m, an oil content of Z2, and the dry heat shrinkage rate of Z3 at 190 °C, 15 min and 0.01 cN/dtex.

The method for preparing a branched diol including that: reacting A1, A2 and triethylamine under a nitrogen atmosphere at T0 °C for 20 min to obtain a concentrated solution, then adding the concentrated solution to a hydrogenation reactor containing a Raney Nickel catalyst, carrying out an reaction at a hydrogen pressure of 2.914 MPa and at 100 °C, after completing and cooling, the catalyst is precipitated and the solution is treated with an ion exchange resin, and then distilling under reduced pressure, separating, and purifying to obtain the branched diol.

### Example 1

A method for preparing a low-shrinkage polyester industrial yarn, including the following steps:
(1) the preparation of the modified polyester; wherein A' is 1:1.2:0.03, the catalyst is antimony trioxide, the matting agent is titanium dioxide, the stabilizer is triphenyl phosphate, B' is normal pressure, C is 250 °C, D' is 90%, E is 0.01%, F is 0.20%, G is 0.05%, H is 30min, I is 500Pa, J is 260°C, k is 40min, L' is 100Pa, M is 275°C, N is 70min, O is 0.6 wt%, P is 20000, Q is 2.0, R is 3%, and the branched diol is 2-ethyl-2-methyl-1,3-propanediol, and the structural formula is as follows: 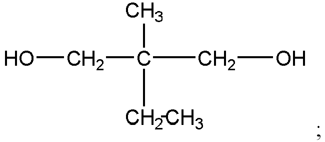
(2) the preparation of the oil; wherein the crown ether is 2-hydroxymethyl-12-crown-4, the potassium phosphate salt is potassium dodecyl phosphate, the sodium alkyl sulfonate is sodium dodecyl sulfate, the mineral oil is 9# mineral oil, t1 is 40°C, t2 is 1h, a1 is 2 parts; a2 is 10 parts; a3 is 90 parts; a4 is 8 parts; a5 is 3 parts; B is 79.6wt%, b2 is 14.5wt%; b3 is 29.6 mm²/s, b4 is 0.93 mm²/s; c1 is 125N, c2 is 24.8 cN/cm, c3 is 1.3×10⁸Ω·cm, µₛ is 0.255, µ_{d} is 0.266, µₛ₁ is 0.203, µ_{d1} is 0.320, and d is 15wt%;
(3) the modified polyester is processed through solid state polycondensation, melting, metering, extruding, cooling, oiling, stretching, heat setting, and winding to prepare the low-shrinkage polyester industrial yarn, wherein E0 is 11 dL/g, and e is 44 days; wherein the spinning process parameters of the low-shrinkage polyester industrial yarn are as follows: T1 is 310°C, T2 is 297°C, P1 is 170 Bar, T2' is 23°C, W1 is 80%, V2 is 0.5m/s, P0 is 0.16MPa, P2 is 0.21MPa; V3 is 3000m/min; wherein the process parameters for stretching and heat setting are as follows: V4 is 530m/min; V5 is 750m/min; T3 is 90°C; V6 is 2100m/min; T4 is 130°C; V7 is 3200 m/min; T5 is 230 °C; V8 is 3200 m/min; T6 is 235 °C; V9 is 3000 m/min; and T7 is 180 °C.

The prepared low-shrinkage polyester industrial yarn, wherein D1 is 1500 dtex, D2 is -0.1%, Y1 is 7.7 cN/dtex, Y2 is 2.7%, Y3 is 20.3%, Y4 is -0.11%, Y5 is 7.3%, Z1 is 7/m, Z2 is 0.8%, and Z3 is 4.7%.

### Example 2

A method for preparing a low-shrinkage polyester industrial yarn, including the following steps:
(1) the preparation of the modified polyester; wherein A' is 1:1.3:0.04, the branched diol is 2,2-diethyl-1,3-propanediol, the catalyst is ethylene glycol oxime, the matting agent is titanium dioxide, the stabilizer is trimethyl phosphate, B' is normal pressure, C is 260 °C, D' is 91% E is 0.02%, F is 0.21%, G is 0.03%, H is 35 min, I is 490Pa, J is 261 °C, k is 30 min, L' is 100 Pa, M is 277 °C, N is 85 min, O is 0.6 wt%, P is 27000, Q is 1.8, R is 5%, and the structural formula of 2,2-diethyl-1,3-propanediol is as follows: 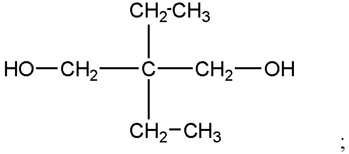
(2) the preparation of the oil; wherein the crown ether is 15-crown-5, the phosphate potassium salt is isomeric tridecyl polyoxyethylene ether phosphate potassium salt, the sodium alkyl sulfonate is sodium pentadecyl sulfonate, the mineral oil is 10# mineral oil, t1 is 48°C, t2 is 3h, a1 is 8 parts; a2 is 10 parts; a3 is 85 parts; a4 is 11 parts; a5 is 5 parts; b is 70.83 wt%, b2 is 11 wt%; b3 is 30.1 mm²/s, b4 is 0.94 mm²/s; c1 is 125N, c2 is 23.2cN/cm, c3 is 1.8×10⁸Ω·cm, µₛ is 0.250, µ_{d} is 0.272, µₛ₁ is 0.209, µ_{d1} is 0.329, and d is 14wt%;
(3) the modified polyester is processed through solid state polycondensation, melting, metering, extruding, cooling, oiling, stretching, heat setting, and winding to prepare the low-shrinkage polyester industrial yarn, wherein E0 is 1.0 dL/g, and e is 40 days; wherein the spinning process parameters of the low-shrinkage polyester industrial yarn are as follows: T1 is 290 °C; T2 is 295 °C; P1 is 165 Bar; T2' is 21 °C; W1 is 75%; V2 is 0.45 m/s; P0 is 0.14MPa; P2 is 0.18MPa; V3 is 2600m/min; wherein the process parameters for stretching and heat setting are as follows: V4 is 500 m/min; V5 is 520 m/min; T3 is 80 °C; V6 is 1800 m/min; T4 is 100 °C; V7 is 2800 m/min; T5 is 200 °C; V8 is 2800 m/min; T6 is 200 °C; V9 is 2600 m/min; and T7 is 150 °C.

The prepared low-shrinkage polyester industrial yarn, wherein D1 is 550 dtex, D2 is -1.5%, Y1 is 7.0 cN/dtex, Y2 is 3.0%, Y3 is 19%, Y4 is -2%, Y5 is 8.0%, Z1 is 4/m, Z2 is 0.4%, and Z3 is 2.5%.

### Example 3

A method for preparing a low-shrinkage polyester industrial yarn, including the following steps:
(1) the preparation of the modified polyester; wherein A' is 1:1.4:0.05, the branched diol is 2-butyl-2-ethyl-1,3-propanediol, the catalyst is ruthenium acetate, the matting agent is titanium dioxide, the stabilizer is trimethyl phosphite, B' is 0.1 MPa, C is 252 °C, D' is 92%, E is 0.03%, F is 0.23%, G is 0.01%, H is 40 min, I is 495 Pa, J is 263 °C, and k is 45 min. L' is 95Pa, M is 278 °C, N is 60 min, O is 0.5 wt%, P is 21000, Q is 2.2, R is 4%, S' is 1.3 wt%, T is 34 wt%, and the structural formula of 2-butyl-2-ethyl-1,3-propanediol is as follows: 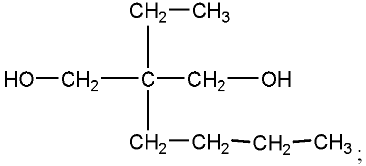
(2) the preparation of the oil; wherein the crown ether is 2-hydroxymethyl-15-crown-5, the potassium phosphate salt is dodecyl alcohol phosphate potassium salt, the sodium alkyl sulfonate is sodium pentadecyl sulfonate, the mineral oil is 11# mineral oil, t1 is 48°C, t2 is 3h, a1 is 8 parts; a2 is 10 parts; a3 is 85 parts; a4 is 11 parts; a5 is 5 parts; b is 70.83wt%, b2 is 11wt%; b3 is 30.1mm²/s, b4 is 0.94mm²/s; c1 is 125N, c2 is 23.2cN/cm, c3 is 1.8×10⁸Ω·cm, µₛ is 0.250, µ_{d} is 0.272, µₛ₁ is 0.209, µ_{d1} is 0.329, and d is 14wt%;
(3) the modified polyester is processed through solid state polycondensation, melting, metering, extruding, cooling, oiling, stretching, heat setting, and winding to prepare the low-shrinkage polyester industrial yarn, wherein E0 is 1.2dL/g, and e is 44 days; wherein the spinning process parameters of the low-shrinkage polyester industrial yarn are as follows: T1 is 320 °C; T2 is 300 °C; P1 is 175 Bar; T2' is 25 °C; W1 is 85%. V2 is 0.65m/s; P0 is 0.18MPa; P2 is 0.22MPa; V3 is 3400m/min; wherein the process parameters for stretching and heat setting are as follows: V4 is 600m/min; V5 is 1000m/min; T3 is 100°C; V6 2500 m/min; T4 is 150 °C; V7 is 3500 m/min; T5 is 250 °C; V8 is 3500 m/min; T6 is 250 °C; V9 is 3400 m/min; T7 is 220 °C.

The prepared low-shrinkage polyester industrial yarn, wherein D1 is 4400 dtex, D2 is 1.5%, Y1 is 7.1 cN/dtex, Y2 is 2.9%, Y3 is 21%, Y4 is 2%, Y5 is 7.9%, Z1 is 9/m, Z2 is 0.46%, and Z3 is 2.9%.

### Example 4

A method for preparing a low-shrinkage polyester industrial yarn, including the following steps:
(1) the preparation of the modified polyester; wherein T0 is 90 °C, A1 is 3,3-diethyl-propanal, A2 is acetaldehyde, A' is 1:1.5:0.06, the catalyst is antimony trioxide, the matting agent is titanium dioxide, the stabilizer is triphenyl phosphate, B' is 0.3 MPa, C is 255 °C, D' is 95%, E is 0.04%, F is 0.25%, G is 0.01%; H is 50 min, I is 400Pa, J is 265 °C, k is 33 min, L' is 90 Pa, M is 280 °C, N is 50 min, O is 0.2 wt%, P is 23000, Q is 1.9, R is 3.5%, and the branched diol is 3,3-diethyl-1,5-pentanediol, and the structural formula is as follows: 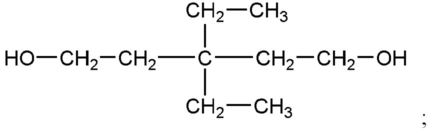
(2) the preparation of the oil; wherein the crown ether is 2-hydroxymethyl-12-crown-4, the potassium phosphate salt is potassium dodecyl phosphate, and the sodium alkyl sulfonate is sodium hexadecyl sulfonate, the mineral oil is 12# mineral oil, t1 is 40°C, t2 is 2.5h, a1 is 5 parts; a3 is 95 parts; a4 is 9 parts; a5 is 2 parts; b is 85.58wt%, b2 is 9wt%, b3 is 29.5mm²/s, b4 is 0.93mm²/s, c1 is 121N, c2 is 24.3cN/cm, c3 is 1.0×10⁸Ω·cm, µₛ is 0.260, µ_{d} is 0.263, µₛ₁ is 0.202, µ_{d1} is 0.330, and d is 19wt%;
(3) the modified polyester is processed through solid state polycondensation, melting, metering, extruding, cooling, oiling, stretching, heat setting, and winding to prepare the low-shrinkage polyester industrial yarn, wherein E0 is 1.05dL/g, and e is 41 days; wherein the spinning process parameters of the low-shrinkage polyester industrial yarn are as follows: T1 is 300 °C; T2 is 298 °C; P1 is 168 Bar; T2' is 22 °C; W1 is 78%; V2 is 0.48 m/s; P0 is 0.15MPa; P2 is 0.21MPa; V3 is 2800m/min; wherein the process parameters for stretching and heat setting are as follows: V4 is 520m/min; V5 is 700m/min; T3 is 85°C; V6 is 2100m /min; T4 is 120 °C; V7 is 3000 m/min; T5 is 230 °C; V8 is 3000 m/min; T6 is 220 °C; V9 is 2800 m/min; T7 is 170 °C.

The prepared low-shrinkage polyester industrial yarn, wherein D1 is 1100 dtex, D2 is -1.2%, Y1 is 7.2 cN/dtex, Y2 is 2.9%, Y3 is 20.3%, Y4 is -1.4%, Y5 is 7.8%, Z1 is 5/m, Z2 is 0.5%, and Z3 is 3.8%.

### Example 5

A method for preparing a low-shrinkage polyester industrial yarn, including the following steps:
(1) the preparation of the modified polyester; wherein T0 is 91 °C, A1 is 4,4-diethyl-butyraldehyde, A2 is propionaldehyde, A' is 1:1.6:0.03, the catalyst is ethylene glycol oxime, the matting agent is titanium dioxide, the stabilizer is trimethyl phosphate, B' is normal pressure, C is 257 °C, D' is 92%, E is 0.05%, F is 0.20%, G is 0.04%, H is 33min, I is 450 Pa, J is 270 °C, k is 30 min, L' is 95 Pa, M is 275 °C, N is 60 min, O is 0.5 wt%, P is 25000, Q is 2.1, R is 5%, and the branched diol is 4,4-diethyl-1,7-heptanediol, and the structural formula is as follows: 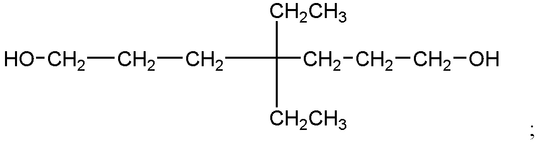
(2) the preparation of the oil; wherein the crown ether is 15-crown-5, the phosphate salt is isomeric triol polyoxyethylene ether phosphate potassium salt, the sodium alkyl sulfonate is sodium dodecyl sulfate, the mineral oil is 13# mineral oil, t1 is 52°C, t2 is 2h, a1 is 10 parts; a2 is 5 parts; a3 is 70 parts; a4 is 8 parts; a5 is 6 parts; b is 70.70wt%, b2 is 13.5wt%; b3 is 28.6mm²/s, b4 is 0.95mm²/s; c1 is 126N, c2 is 24.9cN/cm, c3 is 1.2×10⁸Ω·cm, µₛ is 0.251, µ_{d} is 0.262, µₛ₁ is 0.202, µ_{d1} is 0.332, and d is 11wt%;
(3) the modified polyester is processed through solid state polycondensation, melting, metering, extruding, cooling, oiling, stretching, heat setting, and winding to prepare the low-shrinkage polyester industrial yarn, wherein E0 is 1.15 dL/g, and e is 43 days; wherein the spinning process parameters of the low-shrinkage polyester industrial yarn are as follows: T1 is 312 °C; T2 is 298 °C; P1 is 172 Bar; T2' is 24 °C; W1 is 82%; V2 is 0.5 m/s; P0 is 0.17MPa; P2 is 0.21MPa; V3 is 3100m/min; wherein the process parameters for stretching and heat setting are as follows: V4 is 560m/min; V5 is 800 m/min; T3 is 90°C; V6 is 2300 m/min; T4 is 130 °C; V7 is 3200 m/min; T5 is 230 °C; V8 is 3200 m/min; T6 is 240 °C; V9 is 3100 m/min; and T7 is 210 °C.

The prepared low-shrinkage polyester industrial yarn, wherein D1 is 3000 dtex, D2 is 1.1%, Y1 is 6.6 cN/dtex, Y2 is 2.8%, Y3 is 20.4%, Y4 is 1.2%, Y5 is 7.4%, Z1 is 8/m, Z2 is 0.69%, and Z3 is 4.8%.

### Example 6

A method for preparing a low-shrinkage polyester industrial yarn, including the following steps:
(1) the preparation of the modified polyester; wherein T0 is 92 °C, A1 is 4,4-bis(1-methylethyl)-butanal, A2 is propionaldehyde, A' is 1:1.7:0.05, the catalyst is antimony acetate, the matting agent is titanium dioxide, the stabilizer is trimethyl phosphite, B' is 0.2 MPa, C is 253 °C, D' is 96%, E is 0.01%, F is 0.20%, G is 0.05%, H is 38 min, I is 480 Pa, J is 262 °C, k is 38 min, L' is 98 Pa, M is 279 °C, N is 80 min, O is 0.55 wt%, P is 27000, Q is 2.2, R is 4%, and the branched diol is 4,4-bis(1,-methylethyl)-1,7-heptanediol, and the structural formula is as follows: 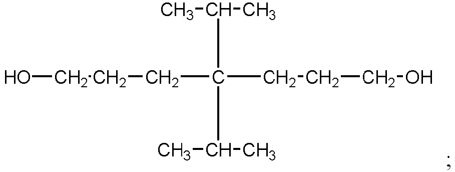
(2) the preparation of the oil; wherein the crown ether is 2-hydroxymethyl-15-crown-5, the potassium phosphate salt is potassium tetradecyl phosphate, the sodium alkyl sulfonate is sodium pentadecyl sulfonate, the mineral oil is 14# mineral oil, t1 is 55°C, t2 is 1h, a1 is 3 parts; a2 is 10 parts; a3 is 75 parts; a4 is 14 parts; a5 is 7 parts; b is 68.8wt%, b2 is 12wt%; b3 is 27.5mm²/s, b4 is 0.95mm²/s; c1 is 126N, c2 is 25.4cN/cm, c3 is 1.6×10⁸Ω·cm, µₛ is 0.255, µ_{d} is 0.267, µₛ₁ is 0.203, µ_{d1} is 0.330, and d is 17.5wt%;
(3) the modified polyester is processed through solid state polycondensation, melting, metering, extruding, cooling, oiling, stretching, heat setting, and winding to prepare the low-shrinkage polyester industrial yarn, wherein E0 is 1.08dL/g, and e is 41 days; wherein the spinning process parameters of the low-shrinkage polyester industrial yarn are as follows: T1 is 300 °C; T2 is 298 °C; P1 is 168 Bar; T2' is 22 °C; W1 is 78%; V2 is 0.49 m/s; P0 is 0.15MPa; P2 is 0.21MPa; V3 is 3050m/min; wherein the process parameters for stretching and heat setting are as follows: V4 is 520m/min; V5 is 700m/min; T3 is 85 °C; V6 is 2100m /min; T4 is 120 °C; V7 is 3100 m/min; T5 is 230 °C; V8 is 3100 m/min; T6 is 220 °C; V9 is 3050 m/min; and T7 is 170 °C.

The prepared low-shrinkage polyester industrial yarn, wherein D1 is 1500 dtex, D2 is -1.0%, Y1 is 7.2 cN/dtex, Y2 is 2.9%, Y3 is 20.3%, Y4 is -1.1%, Y5 is 7.4%, Z1 is 5/m, Z2 is 0.65%, and Z3 is 3.9%.

### Example 7

A method for preparing a low-shrinkage polyester industrial yarn, including the following steps:
(1) the preparation of the modified polyester; wherein T0 is 93 °C, A1 is 3,3-dipropyl-propanal, A2 is acetaldehyde, A' is 1:1.8:0.03, the catalyst is antimony trioxide, the matting agent is titanium dioxide, the stabilizer is triphenyl phosphate, B' is 0.3 MPa, C is 250 °C, D' is 90%, E is 0.03%, F is 0.24%, G is 0.02%, H is 42 min, I is 455Pa, J is 264 °C, k is 45 min, L' is 85 Pa, M is 285 °C, N is 75 min, O is 0.45 wt%, P is 26500, Q is 2.2, R is 4.5%, and the branched diol is 3,3-dipropyl-1,5-pentanediol, and the structural formula is as follows: 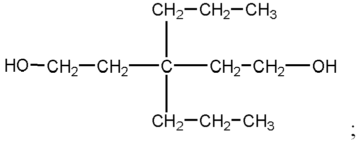
(2) the preparation of the oil; wherein the crown ether is 15-crown-5, the potassium phosphate is potassium dodecyl phosphate, the sodium alkyl sulfonate is sodium hexadecyl sulfonate, the mineral oil is 15# mineral oil, t1 is 41°C, t2 is 2h, a1 is 8 parts; a2 is 20 parts; a3 is 100 parts; a4 is 15 parts; a5 is 2 parts; b is 68.97wt%, b2 is 8.5wt%; b3 is 28.4mm²/s, b4 is 0.94mm²/s; c1 is 122N, c2 is 26.8cN/cm, c3 is 1.8×10⁸Ω·cm, µₛ is 0.263, µ_{d} is 0.268, µₛ₁ is 0.210, µ_{d1} is 0.320, and d is 16wt%;
(3) the modified polyester is processed through solid state polycondensation, melting, metering, extruding, cooling, oiling, stretching, heat setting, and winding to prepare the low-shrinkage polyester industrial yarn, wherein E0 is 1.09dL/g, and e is 41 days; wherein the spinning process parameters of the low-shrinkage polyester industrial yarn are as follows: T1 is 300 °C; T2 is 298 °C; P1 is 168 Bar; T2' is 22 °C; W1 is 78%; V2 is 0.52 m/s; P0 is 0.15MPa; P2 is 0.20MPa; V3 is 2800m/min; wherein the process parameters for stretching and heat setting are as follows: V4 is 520m/min; V5 is 700m/min; T3 is 85°C; V6 is 2100m /min; T4 is 120 °C; V7 is 2900 m/min; T5 is 230 °C; V8 is 2900 m/min; T6 is 210 °C; V9 is 2800 m/min; T7 is 170 °C.

The prepared low-shrinkage polyester industrial yarn, wherein D1 is 1800 dtex, D2 is -0.8%, Y1 is 7.2 cN/dtex, Y2 is 2.9%, Y3 is 20.3%, Y4 is -0.7%, Y5 is 7.3%, Z1 is 5/m, Z2 is 0.80%, and Z3 is 4.65%.

### Example 8

A method for preparing a low-shrinkage polyester industrial yarn, including the following steps:
(1) the preparation of the modified polyester; wherein T0 is 94 °C, A1 is 4,4-dipropyl-butyraldehyde, A2 is acetaldehyde, A' is 1:1.9:0.04, the catalyst is antimony ethylene glycol, the matting agent is titanium dioxide, the stabilizer is trimethyl phosphate, B' is 0.3 MPa, C is 260 °C, D' is 93%, E is 0.04%, F is 0.21%, G is 0.03%, H is 45 min, I is 475Pa, J is 265 °C, k is 48 min, L' is 88 Pa, M is 283 °C, N is 80 min, O is 0.6 wt%, P is 23000, Q is 2.0, R is 3%, and the branched diol is 4,4-dipropyl-1,7-heptanediol, and the structural formula is as follows: 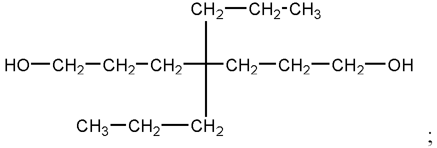
(2) the preparation of the oil; wherein the crown ether is 2-hydroxymethyl-12-crown-4, the potassium phosphate salt is potassium tetradecyl phosphate, the sodium alkyl sulfonate is sodium pentadecyl sulfonate, the mineral oil is 16# mineral oil, t1 is 45°C, t2 is 3h, a1 is 9 parts; a3 is 80 parts; a4 is 12 parts; a5 is 5 parts; b is 83.33wt%, b2 is 14wt%; b3 is 30.0mm²/s, b4 is 0.93mm²/s; c1 is 127N, c2 is 23.5cN/cm, c3 is 1.5×10⁸Ω·cm, µₛ is 0.262, µ_{d} is 0.273, µₛ₁ is 0.2038, µ_{d1} is 0.328, and d is 18wt%;
(3) the modified polyester is processed through solid state polycondensation, melting, metering, extruding, cooling, oiling, stretching, heat setting, and winding to prepare the low-shrinkage polyester industrial yarn, wherein E0 is 1.12 dL/g, and e is 41 days; wherein the spinning process parameters of the low-shrinkage polyester industrial yarn are as follows: T1 is 300 °C; T2 is 298 °C; P1 is 168 Bar; T2' is 22 °C; W1 is 78%; V2 is 0.52 m/s; P0 is 0.15MPa; P2 is 0.21MPa; V3 is 3200m/min; wherein the process parameters for stretching and heat setting are as follows: V4 is 520m/min; V5 is 700m/min; T3 is 85 °C; V6 is 2100m/min; T4 is 120 °C; V7 is 3300 m/min; T5 is 230 °C; V8 is 3300 m/min; T6 is 230 °C; V9 is 3200 m/min; and T7 is 170 °C.

The prepared low-shrinkage polyester industrial yarn, wherein D1 is 1900 dtex, D2 is -1.2%, Y1 is 7.2 cN/dtex, Y2 is 2.9%, Y3 is 20.3%, Y4 is -1.4%, Y5 is 7.8%, Z1 is 5/m, Z2 is 0.5%, and Z3 is 4.7%.

### Example 9

A method for preparing a low-shrinkage polyester industrial yarn, including the following steps:
(1) the preparation of the modified polyester; wherein T0 is 95 °C, A1 is 4-methyl-4-(1,1-dimethylethyl)-butanal, A2 is propionaldehyde, A' is 1:2.5:0.05, the catalyst is barium acetate, the matting agent is titanium dioxide, the stabilizer is trimethyl phosphate, B' is normal pressure, C is 251 °C, D' is 96%, E is 0.05%, F is 0.22%, G is 0.04%, H is 30min, I is 420Pa, J is 267°C, k is 50min, L' is 80Pa, M is 280°C, N is 90min, O is 0.25wt%, P is 24000, Q is 2.2, R is 4%, and the branched diol is 4-methyl-4-(1,1-dimethylethyl)-1,7-heptanediol, and the structural formula is as follows: 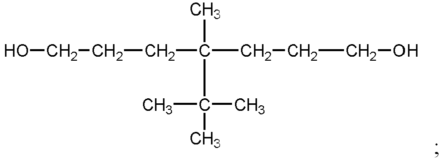
(2) the preparation of the oil; wherein the crown ether is 2-hydroxymethyl-15-crown-5, the potassium phosphate salt is potassium dodecyl phosphate, the sodium alkyl sulfonate is sodium dodecyl sulfate, t1 is 55°C, t2 is 1h, a2 is 15 parts; a3 is 90 parts; a4 is 8 parts; a5 is 7 parts; b is 81.81wt%, b2 is 10wt%; b3 is 29.7mm²/s, b4 is 0.94mm²/s; c1 is 126N, c2 is 24.8cN/cm, c3 is 1.8×10⁸Ω·cm, µₛ is 0.250, µ_{d} is 0.264, µₛ₁ is 0.210, µ_{d1} is 0.321, and d is 14wt%;
(3) the modified polyester is processed through solid state polycondensation, melting, metering, extruding, cooling, oiling, stretching, heat setting, and winding to prepare the low-shrinkage polyester industrial yarn, wherein E0 is 1.17dL/g, and e is 43 days; wherein the spinning process parameters of the low-shrinkage polyester industrial yarn are as follows: T1 is 312 °C; T2 is 298 °C; P1 is 175 Bar; T2' is 23 °C; W1 is 82%; V2 is 0.5 m/s; P0 is 0.17MPa; P2 is 0.21MPa; V3 is 3100m/min; wherein the process parameters for stretching and heat setting are as follows: V4 is 560m/min; V5 is 800m/min; T3 is 90°C; V6 is 2300m/min; T4 is 130 °C; V7 is 3200 m/min; T5 is 230 °C; V8 is 3200 m/min; T6 is 210 °C; V9 is 3100 m/min; and T7 is 210 °C.

The prepared low-shrinkage polyester industrial yarn, wherein D1 is 2800 dtex, D2 is 0.25%, Y1 is 6.5 cN/dtex, Y2 is 2.85%, Y3 is 20.5%, Y4 is 0.4%, Y5 is 7.5%, Z1 is 8/m, Z2 is 0.75%, and Z3 is 4.6%.

### Example 10

A method for preparing a low-shrinkage polyester industrial yarn, including the following steps:
(1) the preparation of the modified polyester; wherein T0 is 90 °C, A1 is 3-methyl-3-pentyl-propanal, A2 is propionaldehyde, A' is 1:1.2:0.06, the catalyst is ethylene glycol hydrazine, the matting agent is titanium dioxide, the stabilizer is trimethyl phosphite, B' is 0.1 MPa, C is 255 °C, D' is 92%, E is 0.01%, F is 0.20%, G is 0.01%, H is 50 min. I is 490Pa, J is 269°C, k is 30min, L' is 100Pa, M is 281°C, N is 55min, O is 0.1wt%, P is 20000, Q is 1.9, R is 3.5%, and the branched diol is 3-methyl-3-pentyl-1,6-hexanediol, and the structural formula is as follows: 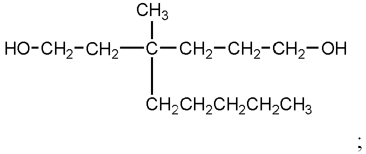
(2) the preparation of the oil; wherein the crown ether is 2-hydroxymethyl-12-crown-4, the potassium phosphate salt is potassium dodecyl phosphate, the sodium alkyl sulfonate is sodium dodecyl sulfate, the mineral oil is 9# mineral oil, t1 is 40°C, t2 is 1h; a1 is 2 parts, a2 is 10 parts; a3 is 90 parts; a4 is 8 parts; a5 is 3 parts; b is 79.6wt%, b2 is 14.5wt%; b3 is 29.6mm²/s, b4 is 0.93mm²/s; c1 is 125N, c2 is 24.8cN/cm, c3 is 1.3×10⁸Ω·cm, µₛ is 0.255, µ_{d} is 0.266, µₛ₁ is 0.203, µ_{d1} is 0.320, and d is 14wt%;
(3) the modified polyester is processed through solid state polycondensation, melting, metering, extruding, cooling, oiling, stretching, heat setting, and winding to prepare the low-shrinkage polyester industrial yarn, wherein E0 is 1.14 dL /g, and e is 43 days; wherein the spinning process parameters of the low-shrinkage polyester industrial yarn are as follows: T1 is 312 °C; T2 is 298 °C; P1 is 175 Bar; T2' is 24 °C; W1 is 82%; V2 is 0.5 m/s; P0 is 0.17MPa; P2 is 0.21MPa; V3 is 3100m/min; wherein the process parameters for stretching and heat setting are as follows: V4 is 560m/min; V5 is 700m/min; T3 is 90°C; V6 is 2300m /min; T4 is 130 °C; V7 is 3200 m / min; T5 is 230 °C; V8 is 3200 m/min; T6 is 230 °C; V9 is 3100 m/min; and T7 is 210 °C.

The prepared low-shrinkage polyester industrial yarn, wherein D1 is 2300 dtex, D2 is 0.4%, Y1 is 6.4 cN/dtex, Y2 is 2.9%, Y3 is 20.4%, Y4 is 0.5%, Y5 is 7.4%, Z1 is 8/m, Z2 is 0.76%, and Z3 is 4.7%.

### Example 11

A method for preparing a low-shrinkage polyester industrial yarn, including the following steps:
(1) the preparation of the modified polyester; wherein T0 is 95 °C, A1 is 3,3-dipentyl-propanal, A2 is acetaldehyde, A' is 1:2.0:0.03, the catalyst is cerium acetate, the matting agent is titanium dioxide, the stabilizer is trimethyl phosphite, B' is 0.2MPa, C is 250 °C, D' is 97%, E is 0.01%, F is 0.23%, G is 0.05%, H is 45min, I is 500Pa , J is 260 °C, k is 40 min, L' is 92 Pa, M is 277 °C, N is 80 min, O is 0.35 wt%, P is 25500, Q is 1.8, R is 5%, and the branched diol is 3,3-dipentyl-1,5-pentanediol, and the structural formula is as follows: 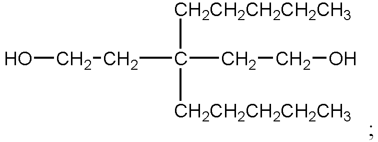
(2) the preparation of the oil; wherein the crown ether is 2-hydroxymethyl-12-crown-4, the potassium phosphate salt is potassium dodecyl phosphate, the sodium alkyl sulfonate is sodium dodecyl sulfate, the mineral oil is 12# mineral oil, t1 is 40°C, t2 is 2.5h, a1 is 5 parts; a3 is 95 parts; a4 is 9 parts; a5 is 2 parts; b is 85.58wt%, b2 is 9wt%; b3 is 29.5mm²/s, b4 is 0.93mm²/s; c1 is 121N, c2 is 24.3cN/cm, c3 is 1.0×10⁸Ω·cm, µₛ is 0.260, µ_{d} is 0.263, µₛ₁ is 0.202, µ_{d1} is 0.330, and d is 18wt%;
(3) the modified polyester is processed through solid state polycondensation, melting, metering, extruding, cooling, oiling, stretching, heat setting, and winding to prepare the low-shrinkage polyester industrial yarn, wherein E0 is 1.18 dL/g, and e is 43 days; wherein the spinning process parameters of the low-shrinkage polyester industrial yarn are as follows: T1 is 312 °C; T2 is 298 °C; P1 is 170 Bar; T2' is 24 °C; W1 is 82%; V2 is 0.5 m/s; P0 is 0.17MPa; P2 is 0.21MPa; V3 is 3100m/min; wherein the process parameters for stretching and heat setting are as follows: V4 is 560m/min; V5 is 900m/min; T3 is 90°C; V6 is 2300m/min; T4 is 130 °C; V7 is 3200 m/min; T5 is 230 °C; V8 is 3200 m/min; T6 is 240 °C; V9 is 3100 m/min; and T7 is 210 °C.

The prepared low-shrinkage polyester industrial yarn, wherein D1 is 3200dtex, D2 is 0.35%, Y1 is 6.6 cN/dtex, Y2 is 2.8%, Y3 is 20.4%, Y4 is 0.4%, Y5 is 7.4%, Z1 is 8/m, Z2 is 0.77%, and Z3 is 4.65%.

M is 281°C, N is 55min, O is 0.1wt%, P is 20000, Q is 1.9, R is 3.5%, with branching The diol is 3-methyl-3-pentyl-1,6-hexanediol, and the structural formula is as follows:

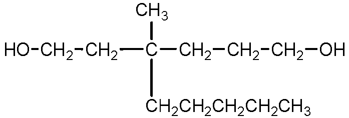

(2) Preparation of an oiling agent for oiling; wherein the crown ether is 2-hydroxymethyl-12-crown-4, the potassium phosphate salt is potassium dodecyl phosphate, and the sodium alkylsulfonate is dodecane Sodium sulfonate, mineral oil is 9# mineral oil, t1 is 40°C, t2 is 1h; a1 is 2parts, a2 is 10parts; a3 is 90parts; a4 is 8parts; a5 is 3parts; b is 79.6wt%, b2 is 14.5wt%; b3 is 29.6mm²/s, b4 is 0.93mm²/s; c1 is 125N, c2 is 24.8cN/cm, c3 is 1.3×10⁸Ω·cm, µₛ is 0.255, µ_{d} is 0.266, µₛ₁ is 0.203, µ_{d1} is 0.320, d is 14wt%;

(3) The low-shrinkage polyester industrial yarn is obtained by solid phase polycondensation, melting, melting, metering, extruding, cooling, oiling, drawing, heat setting and winding, wherein E0 is 1.14 dL /g, e is 43 days, the spinning process parameters of low shrinkage polyester industrial yarn are as follows: T1 is 312 °C; T2 is 298 °C; P1 is 175 Bar; T2' is 24 °C; W1 is 82%; V2 is 0.5 m/s; P0 is 0.17MPa; P2 is 0.21MPa; V3 is 3100m/min; the process parameters for tensile and heat setting are: V4 is 560m/min; V5 is 700m/min; T3 is 90°C; V6 is 2300m /min; T4 is 130 °C; V7 is 3200 m / min; T5 is 230 ° C; V8 is 3200 m/min; T6 is 230 °C; V9 is 3100 m/min; T7 is 210 °C.

The finally obtained low shrinkage polyester industrial yarn, wherein D1 is 2300 dtex, D2 is 0.4%, Y1 is 6.4 cN/dtex, Y2 is 2.9%, Y3 is 20.4%, Y4 is 0.5%, Y5 is 7.4%, Z1 It is 8 / m, Z2 is 0.76%, and Z3 is 4.7%.

### Example 11

A method for preparing a low shrinkage polyester industrial yarn, the steps are as follows:
(1) Preparation of modified polyester; T0 is 95 ° C, A1 is 3,3-dipentyl-propanal, A2 is acetaldehyde, A' is 1:2.0:0.03, the catalyst is cerium acetate, and the matting agent is Titanium dioxide, stabilizer is trimethyl phosphite, B' is 0.2MPa, C is 250 ° C, D' is 97%, E is 0.01%, F is 0.23%, G is 0.05%, H is 45min, I is 500Pa , J is 260 ° C, k is 40 min, L' is 92 Pa, M is 277 ° C, N is 80 min, O is 0.35 wt%, P is 25500, Q is 1.8, R is 5%, branched diol It is 3,3-dipentyl-1,5-pentanediol, and its structural formula is as follows: 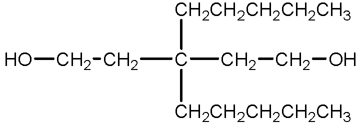
(2) Preparation of an oiling agent; wherein the crown ether is 2-hydroxymethyl-12-crown-4, the potassium phosphate salt is potassium dodecyl phosphate, and the sodium alkylsulfonate is dodecane Sodium sulfonate, mineral oil is 12# mineral oil, t1 is 40°C, t2 is 2.5h, a1 is 5parts; a3 is 95parts; a4 is 9parts; a5 is 2parts; b is 85.58wt%, b2 is 9wt%; b3 is 29.5mm²/s, b4 is 0.93mm²/s; c1 is 121N, c2 is 24.3cN/cm, c3 is 1.0×10⁸Ω·cm, µₛ is 0.260, µ_{d} is 0.263, µₛ₁ is 0.202, µ_{d1} is 0.330, d is 18wt%;
(3) The low-shrinkage polyester industrial yarn is obtained by solid phase polycondensation, melting, melting, metering, extruding, cooling, oiling, drawing, heat setting and winding, wherein E0 is 1.18 dL /g,e is 43 days, the spinning process parameters of low shrinkage polyester industrial yarn are as follows: T1 is 312 °C; T2 is 298 °C; P1 is 170 Bar; T2' is 24 °C; W1 is 82%; V2 is 0.5 m/s; P0 is 0.17MPa; P2 is 0.21MPa; V3 is 3100m/min; the process parameters of tensile and heat setting are: V4 is 560m/min; V5 is 900m/min; T3 is 90°C; V6 is 2300m /min; T4 is 130 °C; V7 is 3200 m/min; T5 is 230 °C; V8 is 3200 m/min; T6 is 240 °C; V9 is 3100 m/min; T7 is 210 °C.

The finally obtained low shrinkage polyester industrial yarn, wherein D1 is 3200dtex, D2 is 0.35%, Y1 is 6.6 cN/dtex, Y2 is 2.8%, Y3 is 20.4%, Y4 is 0.4%, Y5 is 7.4%, Z1 It is 8 / m, Z2 is 0.77%, and Z3 is 4.65%.

## Claims

1. A low-shrinkage polyester industrial yarn, wherein the low-shrinkage polyester industrial yarn is made of a modified polyester, and a molecular chain of the modified polyester comprises a terephthalic acid segment, an ethylene glycol segment and a branched diol segment;
the structural formula of the branched diol segment is as follows: 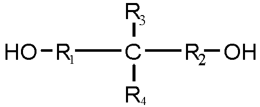
wherein R₁ and R₂ are each independently selected from a linear alkylene group having 1 to 3 carbon atoms, R₃ is selected from an alkyl group having 1 to 5 carbon atoms, and R4 is selected from an alkyl group consisting of 2 to 5 carbon atoms; and
the dry heat shrinkage of the low shrinkage polyester industrial yarn is 2.5 to 4.7% under an environment of 190 °C, 15 min and 0.01 cN/dtex.

2. A method for preparing a low-shrinkage polyester industrial yarn of claim 1, wherein the low-shrinkage polyester industrial yarn is obtained by subjecting the modified polyester to solid phase polycondensation, melting, metering, extruding, cooling, oiling, drawing, heat setting and winding the modified polyester;
wherein an oil agent in said oiling contains crown ether, and the content of crown ether is 67.30 to 85.58wt%;
wherein the oil agent is dispersed in water to obtain an emulsion having a concentration of 14 to 18% by weight.

## Patentansprüche

1. Ein niedrigschrumpfendes Polyester-Industriegarn, bei dem das niedrigschrumpfende Polyester-Industriegarn aus einem modifizierten Polyester besteht und eine Molekularkette des modifizierten Polyesters aus einem Terephthalsäuresegment, einem Ethylenglykolsegment und einem verzweigten Diolsegment besteht;
Die Strukturformel des verzweigten Diol-Segments ist wie folgt: 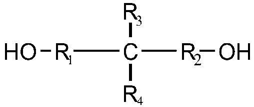
wobei R1 und R2 jeweils unabhängig aus einer linearen Alkylengruppe mit 1 bis 3 Kohlenstoffatomen ausgewählt werden, R3 aus einer Alkylgruppe mit 1 bis 5 Kohlenstoffatomen und R4 aus einer Alkylgruppe mit 2 bis 5 Kohlenstoffatomen ausgewählt wird; und
Die trockene Wärmeschrumpfung des niedrigschrumpfenden Polyester-Industriegarns beträgt bei einer Umgebung von 190 °C, 15 Minuten und 0,01 cN/dtex 2,5 bis 4,7 %.

2. Eine Methode zur Herstellung eines niedrigschrumpfenden Polyester-Industriegarns des Anspruchs 1, bei dem das niedrigschrumpfende Polyester-Industriegarn durch Festphasenpolykondensation, Schmelzen, Messen, Pressen, Kühlen, Ölen, Ziehen, Wärmefixieren und Aufwickeln des modifizierten Polyesters gewonnen wird;
wobei ein Ölmittel in der genannten Ölung Kronenäther enthält und der Kronäther 67,30 bis 85,58 Wt% beträgt;
wobei das Ölmittel in Wasser verteilt wird, um eine Emulsion mit einer Konzentration von 14 bis 18 % nach Gewicht zu erhalten.

## Revendications

1. Un fil industriel de polyester à faible rétrécissement est composé d'un polyester modifié, et une chaîne moléculaire du polyester modifié comprend un segment d'acide térephtalique, un segment d'éthylène glycol et un segment de diol ramifié ;
La formule structurelle du segment de diol ramifié est la suivante : 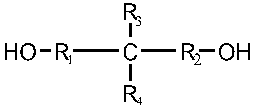
où R1 et R2 sont chacun sélectionnés indépendamment à partir d'un groupe alkylène linéaire comportant de 1 à 3 atomes de carbone, R3 est sélectionné à partir d'un groupe alkyle ayant de 1 à 5 atomes de carbone, et R4 est sélectionné à partir d'un groupe alkyle composé de 2 à 5 atomes de carbone ; et
le retrait thermique sec du fil industriel polyester à faible rétraction est de 2,5 à 4,7 % dans un environnement de 190 °C, 15 min et 0,01 cN/dtex.

2. Une méthode de préparation d'un fil industriel polyester à faible rétrécissement de revendication 1, dans laquelle le fil industriel polyester à faible rétrécissement est obtenu en soumettant le polyester modifié à une polycondensation en phase solide, en fondant, dosant, extrudant, refroidissant, huilant, tirant, thermofixant et enroulant le polyester modifié ;
où un agent huileux dans ladite huilation contient de l'éther de la couronne, et la teneur en éther de la couronne est de 67,30 à 85,58 % en poids ;
où l'agent huileux est dispersé dans l'eau pour obtenir une émulsion ayant une concentration de 14 à 18 % en poids.
